(19) Europäisches Patentamt
European Patent Office
Office européen des brevets

(11) Numéro de publication: **0 077 741**
**B1**

(12) **FASCICULE DE BREVET EUROPEEN**

(45) Date de publication du fascicule du brevet: **18.05.88**

(51) Int. Cl.[4]: **B 29 C 43/00,** G 02 B 6/38

(21) Numéro de dépôt: **82401927.7**

(22) Date de dépôt: **20.10.82**

(54) **Procédé d'obtention, avec précision, d'une pièce présentant des parties en creux et/ou en saillie et produit obtenu par ce procédé.**

(30) Priorité: **21.10.81 FR 8119742**

(43) Date de publication de la demande:
**27.04.83 Bulletin 83/17**

(45) Mention de la délivrance du brevet:
**18.05.88 Bulletin 88/20**

(84) Etats contractants désignés:
**BE DE GB IT NL**

(56) Documents cités:
**EP-A-0 005 792**
**CH-A- 404 183**
**FR-A-2 384 404**
**GB-A- 835 311**
**GB-A-1 600 028**
**US-A-4 076 788**

**ELECTRONICS LETTERS, vol. 16, no. 24, 20 novembre 1980, pages 911-912, Londres, GB; T. KUROKAWA et al.: "Precisely moulded plastic splices for optical fibres"**

(73) Titulaire: **SOURIAU & Cie (S.A.)**
**9/13, rue du Général Galliéni**
**F-92103 Boulogne-Billancourt (FR)**

(72) Inventeur: **de Mendez, Michel**
**La Saulsaie 7 Voie de l'Etoile Dumesnil**
**F-91310 Monthlery (FR)**
Inventeur: **Neymarc, Yves**
**9, rue Marie Edmée**
**F-77500 Chelles (FR)**

(74) Mandataire: **Chevallier, Robert Marie Georges**
**Cabinet BOETTCHER 23, rue La Boétie**
**F-75008 Paris (FR)**

(56) References cited:
**THE BELL SYSTEM TECHNICAL JOURNAL, vol. 58, no. 8, octobre 1979, pages 1825-1837, American Telephone and Telegraph Co., New York, US; A.H. CHERIN et al.: "A vacuum-assisted plastic repair splice for joining optical fiber ribbons"**

**REVIEW OF THE ELECTRICAL COMMUNICATION LABORATORIES, vol. 27, nos. 11-12, novembre-décembre 1979, pages 966-979, Tokyo, JP; M HIRAI: "Splice of optical fiber and cable"**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Description**

La présente invention concerne un procédé d'obtention, avec grande précision, d'une face d'une pièce ayant une fonction déterminée, cette face présentant des parties en creux et/ou en saillie, par rapport à une surface moyenne de référence.

La présente invention concerne aussi les produits obtenus par ce procédé.

Les techniques modernes utilisent de plus en plus des éléments conducteurs de faisceaux lumineux, ceux-ci étant essentiellement constitués par des fibres optiques.

Il est, bien entendu, nécessaire d'abouter les unes aux autres ces fibres afin d'obtenir une propagation continue, avec un minimum d'atténuation, du faisceau lumineux, ceci est obtenu au moyen de connecteurs de fibres optiques.

Parmi l'ensemble des connecteurs qui ont été mis au point dans le but d'obtenir une bonne propagation d'une fibre optique à une autre, il en existe qui comportent essentiellement une embase dans laquelle sont réalisées des rainures ou des encoches dans lesquelles sont logées les extrémités des fibres optiques à abouter.

Cette configuration d'embase permet essentiellement, au moyen des parois de ces rainures, d'obtenir des références sur lesquelles s'appuient les génératrices des cylindres constituant essentiellement la forme des fibres optiques.

Comme ces fibres optiques ont le même diamètre, et qu'elles sont positionnées dans une même rainure, elles se trouvent donc, de ce fait, parfaitement aboutées.

Il est aussi à noter que la transmission d'information sous la forme optique présente un avantage sur les ondes électriques, notamment par le fait qu'elles permettent une transmission d'un nombre d'informations plus important pour un même diamètre de conducteur optique et électrique.

Il est donc nécessaire, comme ces fibres optiques prennent de plus en plus d'importance, de réaliser des connecteurs de fibres optiques ayant des diamètres extrêmement petits.

De ce fait, il est bien entendu nécessaire que les rainures qui ont été mentionées ci-dessus soient réalisées avec une extrême précision, car si celles-ci étaient réalisées avec une précision moyenne, du fait du diamètre très faible des fibres optiques, celles-ci pourraient se trouver complètement décalées l'une de l'autre, et non pas aboutées.

De plus, il faut que ces rainures soient réalisées pour chaque conducteur toujours avec la même précision même si la quantité de connecteurs réalisée atteint celle de la production industrielle de grande série.

Le problème qui se pose donc pour la réalisation de tels connecteurs est celui d'une embase comportant des parties qui peuvent se trouver en saillie et/ou en creux par rapport à une surface moyenne de référence qui, généralement, est plane.

Les techniques qui ont été mises en oeuvre jusqu'à présent n'ont pas donné toutes satisfactions, car elles étaient généralement trop onéreuses du fait qu'elles demandaient un temps de réalisation long et, de plus, la précision obtenue n'était pas répétitive pour tous les connecteurs réalisés.

Très schématiquement, le procédé le plus connu consistait à déposer, sur une embase présentant des formes sensiblement identiques à celles qu'il était nécessaire d'obtenir, une couche par exemple par évaporation, électrolyse, etc. Cette technique demande un temps de déchage, d'attente, de repos, etc., important.

La présente invention a pour but de réaliser un procédé d'obtention d'une face d'une pièce présentant des parties en creux et/ou en saillie par rapport à une surface moyenne de référence, avec une très bonne précision sur cette surface, dans un minimum de temps et surtout avec une précision répétitive pour chaque connecteur.

Plus précisément, la présente invention a pour objet un procédé d'obtention d'une face d'une pièce, ladite face présentant des parties en creux et/ou en saillie par rapport à une surface moyenne de référence, avec une bonne précision, caractérisé par le fait qu'il consiste:

—à réaliser une matrice de référence, ayant une face complémentaire de ladite face à obtenir, cette dite face complémentaire ayant une précision au moins égale à celle qui est désirée pour ladite face à obtenir,

—à réaliser une ébauche de ladite pièce à obtenir avec une face ayant des parties en creux et/ou en saillie, réalisées avec une précision donnée, cette dite précision donnée étant inférieure à la précision à obtenir,

—à placer en regard l'une de l'autre, ladite matrice et ladite ébauche, de façon que lesdites faces et leurs parties complémentaires soient en regard l'une de l'autre, cesdites ébauche et matrice emprisonnant en sandwich une couche dite de copie d'une certaine épaisseur, ladite couche étant en un matériau apte à adhérer uniquement à ladite face de ladite ébauche,

—à appliquer une force de pression pour tendre à rapprocher lesdites ébauche et matrice, afin de comprimer, entre les deux dites faces ladite couche de copie jusqu'à ce que cette dite couche ait atteint une épaisseur d'une valeur sensiblement de l'ordre de la valeur des précisions à obtenir,

—à retirer ladite matrice pour obtenir ladite pièce réalisée avec sa face ayant la valeur de la précision voulue.

La présente invention a aussi pour objet les produits réalisés selon le procédé ci-dessus définis dans la revendication de produit.

D'autres caractéristiques et avantages de la présente invention apparaîtront au cours de la description suivante, donnée en regard des dessins annexés, à titre illustratif mais nullement limitatif, dans lesquelles,

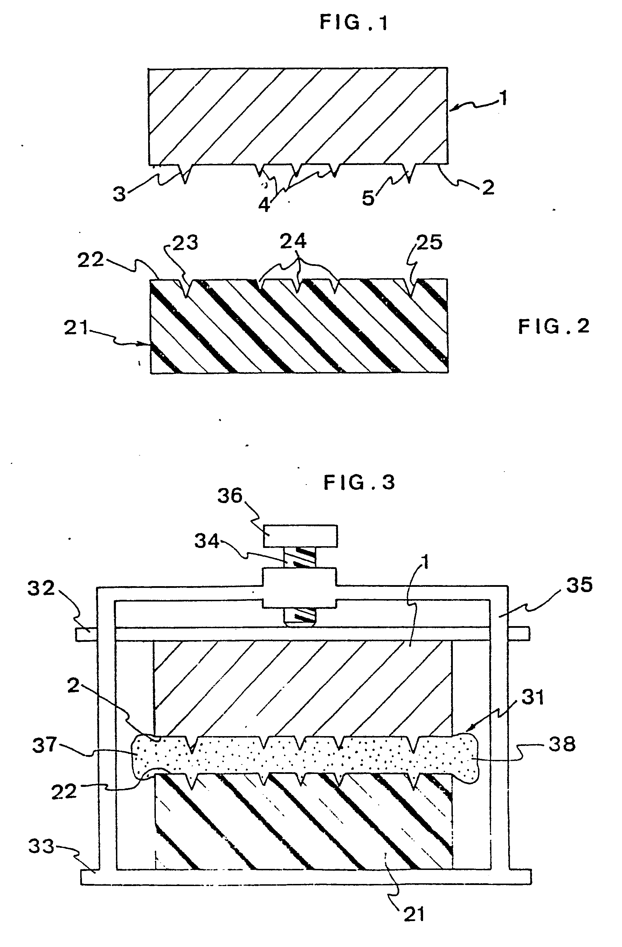

—les figures 1 à 5 représentent les éléments rentrant dans le différentes phases de la mise en oeuvre du procédé pour obtenir sur une pièce, au moins une face ayant des parties en creux, réalisées avec une grande précision.

Les différentes figures permettent de comprendre les différentes phases du procédé, permettant d'obtenir un produit répondant à la réalisation d'une face présentant des parties en creux avec une grande précision.

En effet, les figures illustrent la réalisation d'une pièce contenant une face ne comportant que des parties en creux, mais il est bient évident que l'invention s'appliquerait de la même façon si cette face contenait des parties en saillie et en creux. L'exemple donné permet avantegeusement la réalisation d'un corps d'embase pour connecteur de fibres optiques.

Plus spécialement, pour la mise en oeuvre du procédé, on commence par réaliser, dans une première pièce 1 (figure 1) une matrice de référence en un matériau résistant comme par exemple de l'acier inoxydable, une face en négatif 2 de celle que l'on doit obtenir sur les produits résultat de la mise en oeuvre du procédé.

Dans l'exemple donné, cette face 2 comporte des éléments en saillie 3, 4, 5, qui correspondront à des rainures en creux dans le produit définitif.

Ces éléments en saillie 3, 4, 5 ont donc une forme complémentaire de celle que l'on désire obtenir en définitif, et, de plus, cette face 2, avec ses parties en saillie 3 à 5, est réalisée avec une précision qui est celle qui doit être obtenue avec la face du produit, c'est-à-dire dans le cas considéré de l'embase pour connecteur de fibres optiques.

Parallèlement à la réalisation de cette matrice, un ensemble de corps est réalisé (figure 2) couramment dénommé ébauche 21 sur une face 22 de laquelle sont usinées des parties en creux sensiblement complémentaires 23, 24, 25 des éléments en saillie 3, 4, 5 de la matrice 1.

Dans cette ébauche réalisée dans un matériau comme par exemple de la matière plastique, ces éléments 23, 24, 25 sont constitués de rainures en creux. La face 22 de cette ébauche 21 est réalisée sensiblement complémentaire de la face 2 de la matrice 1, mais la précision d'usinage des différentes rainures 23, 24, 25 est nettement inférieure à la valeur de la précision avec laquelle sont réalisés les éléments en saillie 3, 4, 5 de la matrice 1.

Une fois que ces éléments, c'est-à-dire la matrice 1 et une ébauche 21, sont réalisés, on emprisonne une couche de matériau 31 par exemple d'un polymère qui, une fois polymérisé, adhère à l'ébauche 21, mais en aucune façon à l'embase 1. Lorsque la matrice 1 et l'ébauche 21 sont positionnées pour prendre en sandwich la couche 31, les éléments complémentaires sont sensiblement placés en regard, et de préférence le plus précisément possible, de façon que lorsque ces deux éléments 1 et 21 soient séparés par une même distance sur toute la longueur des deux faces 2 et 22.

Cette couche 31, dite de copie, est disposée entre l'ébauche et la matrice sur une épaisseur relativement importante qui est, par exemple, de deux à trois fois de l'ordre de la différence de la valeur des précisions respectives de la réalisation de la face 2 de la matrice 1, et de la réalisation de la face 22 de l'ébauche 21.

La matrice 2 et l'ébauche 21 ayant cette couche 31 en sandwich, sont placées entre des moyens permettant d'exercer une force de pression qui tend à rapprocher l'ébauche et la matrice l'une de l'autre pour réduire de ce fait, l'épaisseur de la couche 31 jusqu'à une valeur qui soit par exemple de l'ordre de la différence des deux valeurs de précision mentionnées ci-dessus (figure 3).

Ces moyens ont été très schématiquement illustrés sur la figure 3 par une presse comportant deux mâchoires 32, 33, la mâchoire 32 étant montée sur une vis-vérin 34 qui, par rapporte à des montants 35 et en agissant sur la manivelle 36, permet de rapprocher ces deux mâchoires.

Dès que l'épaisseur de cette couche 31 a été réduite à la valeur désirée, les bords dépassant, 37, 38, de ces deux pièces 1 et 21, sont enlevés.

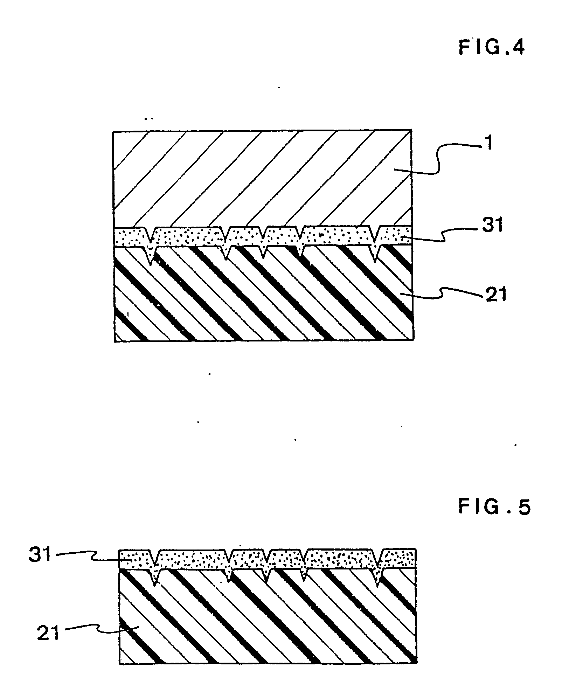

Ensuite, le tout est retiré de la presse pour obtenir un ensemble tel que représenté sur la figure 4 où l'on s'aperçoit que la couche 31 a été sensiblement réduite par rapport à l'épaisseur de celle-ci. Lorsque les deux éléments 1 et 21 n'avaient pas encore été soumis à une pression de rapprochement (figure 3).

Il est alors possible d'enlever la matrice 1 (figure 5) sans que soit abîmée la couche 31 puisque celle-ci est en un matériau qui adhère à l'ébauche et non pas à la matrice.

Il est, de plus, précisé que l'épaisseur de cette couche 31, une fois comprimée, et la plus faible possible dans la limite des tolérances, de façon que le retrait qui se produit incontestablement soit négligeable par rapport à la précision finale voulue.

Bien entendu, il existe différents moyens pour placer la couche 31 entre l'ébauche 21 et la matrice 1, et notamment on peut citer la coulée, l'enduction, l'injection, le transfert, compression, etc.

**Revendications**

1. Procédé d'obtention, avec une bonne précision, d'une face d'une pièce, ladite face présentant des parties en creux et/ou saillie par rapport à une surface moyenne de référence, caractérisé par le fait qu'il consiste:

—à ràaliser une matrice de référence (1), ayant une face complémentaire (2) de ladite face à obtenir, cette dite face complémentaire ayant une précision au moins égale à celle qui est désirée pour ladite face à obtenir,

—à réaliser une ébauche (21) de ladite pièce à obtenir avec une face (22) ayant des parties en creux (23, 24, 25) et/ou en saillie, réalisées avec une précision donnée, cette dite précision donnée étant inférieure à la précision à obtenir,

—à placer en regard l'une de l'autre, ladite matrice et ladite ébauche, de façon que lesdites faces et leurs parties complémentaires soient en regard l'une de l'autre, cesdites ébauche et matrice emprisonnant en sandwich une couche (31) dite de copie d'une certaine épaisseur, ladite couche étant en un matériau apte à adhérer uniquement à ladite face de ladite ébauche,

—à appliquer une force de pression pour tendre de rapprocher lesdites ébauche (21) et matrice (1), afin de comprimer, entre les deux dites faces ladite couche de copie jusqu'à ce que cette couche ait atteint une épaisseur d'une valeur sensiblement de l'ordre de la valeur des précisions à obtenir,

—à retirer ladite matrice (1) pour obtenir ladite pièce réalisée avec sa face ayant la valeur de la précision voulue.

2. Procédé selon la revendication 1, caractérisé par le fait que ladite couche (31) est constituée par un polymère.

3. Procédé selon l'une des revendications précédentes, caractérisé par le fait que ladite couche (31) est disposée entre ladite matrice (1) ébauche (21), selon l'un des procédés suivants: coulée, enduction, injection, transfert, et compression.

4. Produit obtenu par le procédé selon l'une quelconque des revendications 1 à 3 caractérisé en ce qu'il comprend:

—une ébauche (21) en une première matière avec un face (22) creusée de rainures (23, 24, 25) à l'état d'ébauche,

—une couche (31) en une seconde matière qui couvre ladite face (22) en y adhérant et ayant une face libre opposée qui présente des rainures finales utilisables.

**Patentansprüche**

1. Verfahren zum hoch maßgenauen Erzeugen eines Teiles mit einer Oberfläche, wobei die Oberfläche relativ zu einer mittleren Referenzfläche vertiefte und/oder hervorspringende Abschnitte aufweist, gekennzeichnet durch folgende Schritte:

Es wird eine Referenzmatrix (1) mit einer gegenüber der zu erzeugenden Fläche komplementären Fläche (2) angefertigt, wobei die komplementäre Fläche eine Maßgenauigkeit besitzt, die mindestens gleich der für die zu erzeugende Fläche erwünschten Maußgenauigkeit ist,

es wird ein Rohling (21) für das zu erzeugende Teil mit einer Fläche (22) erzeugt, die vertiefte Abschnitt (23, 24, 25) und/oder hervorspringende Abschnitte aufweist, die mit einer vorgegebenen Maßgenauigkeit gefertigt sind, die geringer als die zu erzielende Maßgenauigkeit ist,

die Matrize und der Rohling werden so einander gegenüber angeordnet, daß die genannten Flächen und ihre komplementären Abschnitte einander gegenüberliegen, wobei die Matrize und der Rohling sandwichartig eine sogenannte Kopierschicht (31) mit einer bestimmten Schichtdicke einschließen und wobei die Schicht aus einem Material besteht, das nur an der Fläche des Rohlings haftet, es wird eine Druckkraft ausgeübt, um den Rohling (21) und die Matrize (1) einander anzunähern mit dem Ziel, die Kopierschicht zwischen den beiden Flächen so weit zusammenzudrücken, bis die Schichtdicke einen Wert erreicht hat, der im wesentlichen in der Größenordnung des Wertes der gewünschten Maßgenauigkeit liegt,

die Matrize (1) wird zurückgezogen, um das Teil mit seiner Fläche in der gewünschten Maßgenauigkeit zu erhalten.

2. Verfahren nach Anspruch 1, dadurch gekennzeichnet, daß die Schicht (31) aus einem Polymer besteht.

3. Verfahren nach einem der vorhergehenden Ansprüche, dadurch gekennzeichnet, daß die Schicht (31) durch einen der nachfolgend aufgeführten Verfahrensschritte zwischen die Matrize (1) und den Rohling (21) eingebracht wird: Gießen, Aufstreichen, Einspritzen, Übertragen und Einpressen.

4. Produkt, das durch ein Verfahren nach einem der Ansprüche 1 bis 3 erhalten wird, gekennzeichnet durch

einen Rohling (21) aus einem ersten Material mit einer Fläche (22), die im Rohzustand rillenförmige Vertiefungen (23, 24, 25) aufweist,

eine Schicht (31) aus einem zweiten Material, welche die Fläche (22) bedeckt und an dieser haftet, mit einer dieser gegenüber freien abgewandten Fläche, welche schließlich verwendbare Rillen aufweist.

**Claims**

1. Method of obtaining with high accuracy, one face of a piece, the said face containing protruding and/or indented parts relative to a mean reference surface, characterised in that:

—a reference matrix (1) is produced having one complementary face (2) of the said required face, such said complementary face being of such accuracy at least equal to that required for the said required face,

—a blank (21) is produced of the said required piece with one face (22) having indentations (23, 24, 25) and/or protrusions, made with a given accuracy, such said given accuracy being inferior to the desired accuracy,

—of juxtaposing the said matrix and the said blank, such that the said faces of their complementary parts are facing one another, the said blank and the said matrix sandwiching between them a said copy piece (31) of certain thickness, the said piece being of material capable of adhering only to the said face of the said blank,

—a pressure force is applied to bring together the said blank (21) and the said matrix (1) in order to compress between their two said faces the said copy piece until this piece attains a thickness of value appreciably of the order of the value of the desired accuracy,

—the said matrix (1) is withdrawn to produce the said piece with its face having the value of the required accuracy.

2. Process according to Claim 1 characterised in that the said piece (31) is a polymer.

3. Process according to one of the preceding claims characterised in that the said piece (31) is placed between the said matrix (1) and the said blank (21) according to one of the following methods: casting coating, injection, transfer and compression.

4. Product obtained by the process according to any of Claims 1 to 3, characterised in that it includes:

—a blank (21) of a first material with one face (22) containing indentations (23, 24, 25) in the blank state,

—a piece (31) of a second material which covers the said face (22) by adhering to it and having an opposite free face containing final usable indentations.

FIG.1
1
2
3
4
5
22
23
24
25
21
FIG.2

FIG.3
36
34
1
32
35
2
31
37
38
22
33
21

FIG.4

1
31
21

FIG.5

31
21